# EUROPÄISCHE PATENTSCHRIFT

(11) **EP 2 671 122 B1**
(45) Veröffentlichungstag und Bekanntmachung des Hinweises auf die Patenterteilung: **01.04.2015**
(21) Anmeldenummer: 12702263.0
(22) Anmeldetag: 03.02.2012
(51) Int. Cl.: G05B 19/042

(54) **AUTOMATISIERTE PROJEKTIERUNG EINER LEITTECHNIK EINER TECHNISCHEN ANLAGE**
AUTOMATED PLANNING OF CONTROL EQUIPMENT OF A TECHNICAL SYSTEM
CONCEPTION AUTOMATISÉE D'UNE TECHNIQUE D'ÉCLAIRAGE D'UNE INSTALLATION TECHNIQUE

(30) Priorität: 04.02.2011 EP 11153445
(43) Veröffentlichungstag der Anmeldung: 11.12.2013
(73) Patentinhaber: Siemens Aktiengesellschaft, 80333 München (DE)
(72) Erfinder: HUMPERT, Hans-Dieter, 91334 Hemhofen (DE); KLEYER, Dieter, 91074 Herzogenaurach (DE); WENDELBERGER, Klaus, 68789 St. Leon-Rot (DE)
(86) Internationale Anmeldenummer: PCT/EP2012/051828
(87) Internationale Veröffentlichungsnummer: WO 2012/104403

(56) Entgegenhaltungen:
- EP-A1- 0 770 944
- EP-A1- 0 770 945
- EP-A1- 1 048 993
- WO-A1-97/12301
- DE-A1- 19 748 528
- DE-A1- 19 850 324
- DE-A1-102006 022 558

## Beschreibung

Die Erfindung betrifft ein Verfahren zur Erzeugung einer spezifischen Projektierungsunterlage für eine zu projektierende Leittechnik einer technischen Anlage, insbesondere für eine zu projektierende Kraftwerksleittechnik eines Kraftwerks, sowie eine zur Durchführung des Verfahrens ausgebildete Vorrichtung.

Unter einer Leittechnik, in diesem Fall einer Prozessleittechnik, einer Anlage bezeichnet man üblicherweise Mittel und Verfahren, die einem Steuern, Regeln und Sichern einer solchen prozess- bzw. verfahrenstechnischen Anlage dienen.

Unter einer Projektierung wird üblicherweise eine Vorbereitung eines Ereignisses, eines Prozesses oder eines realen Konstruktes verstanden. Im Bereich einer Prozesstechnik und Prozessautomatisierung wird der Begriff Projektierung für die Erstellung von technischen (oder anderen) Unterlagen für eine zu projektierende Anlage verwendet.

Gegenstand solcher Projektierungsunterlagen sind sogenannte leittechnische Funktionen, wie beispielsweise:
- Funktionspläne von Steuerungen und Regelungen (Steuerungsfunktionsplan, Regelungsfunktionsplan), in denen dargestellt ist, welche Messgrößen bei einer Anlage verwendet und wie diese algorithmisch verarbeitet werden, um zu ermitteln, wie Antriebe, Ventile, Klappen, Motoren, o. ä. der Anlage zu verfahren sind;
- Bedienbilder, über die ein Anlagenfahrer Informationen über einen aktuellen Zustand einer Anlage erhält, beispielsweise Anzeigen, und über die der Anlagenfahrer Stelleingriffe vornehmen kann, wie Bedienelemente;
- Beschreibungen, in denen Funktionalitäten der Anlage und von Automatisierungsfunktionen der Anlage verbal erläutert sind.

Eine solche Projektierungsunterlage selbst ist wiederum aus meist mehreren, miteinander in Zusammenhang stehenden bzw. verknüpften Elementen aufgebaut, welche im Folgenden als sogenannte Projektierungsobjekte bezeichnet werden sollen.

Beispielsweise kann ein solches Projektierungsobjekt ein (Funktions-)Baustein (mit/ohne Verknüpfungen, insbesondere Verbindungen, zu anderen Bausteinen) eines Funktionsplans oder eine Verknüpfung selbst in einem Funktionsplan, ein grafisches Element eines Bedienbildes bzw. eines Bedieninterfaces oder ein Textbaustein einer Beschreibung sein.

Eine Projektierung von höherwertigen leittechnischen Funktionen in der Prozessautomatisierung ist grundsätzlich sehr aufwändig und fehleranfällig.

Eine effiziente Methode, einen Aufwand bei der Projektierung bzw. zur Erstellung solcher Projektierungsunterlagen zu senken und eine Qualität zu verbessern, ist eine Standardisierung.

Im Rahmen einer Standardisierung bzw. der Verwendung von Standards ist es auch bekannt, solche Standards entsprechend abzulegen bzw. abzuspeichern, beispielsweise in Bibliotheken, Archiven, Datenbanken o. ä, - was auch in verschiedener Form, wie auf Papier oder elektronisch möglich ist - wo sie einem Benutzer, beispielsweise einem Projekteur, über einen Zugriff zur Verfügung stehen.

Eine wiederholte Verwendung eines Standards bei der Projektierung bzw. für eine Projektierungsunterlage, wie für einen Funktionsplan, ein Bedienbild bzw. eine Beschreibung, stellt sicher, dass
- zum einen der entsprechende Projektierungsaufwand deutlich reduziert wird, da auf eine bereits existierende (Standard-)Vorlage zurückgegriffen werden kann,
- und zum anderen die Qualität der Projektierung deutlich erhöht wird, da auf (Standard-)Unterlagen zurückgegriffen wird, die sich in mehreren Projekten bereits bewährt haben.

Verfahrenstechnische Anlagen unterscheiden sich jedoch in ihrem spezifischen verfahrenstechnischen und/oder konstruktiven Aufbau (Auslegung der Anlagen auf unterschiedliche Arbeitspunkte und Betriebsweisen, andere Hersteller für einzelne Anlagenkomponenten o. ä.). Außerdem werden kundenseitig spezifische, unterschiedliche Anforderungen an die jeweilige Anlage gestellt.

Dieses erfordert, dass
- entweder definierte Standards immer wieder auf die jeweiligen spezifischen Anforderungen eines bestimmten Projektes, d. h. eine zu projektierende Anlage, anzupassen sind oder
- für jeden Standard verschiedene Varianten zur erstellen sind, mit denen dann zumindest zum größten Teil projektspezifische Anforderungen einer Anlage direkt erfüllt werden können.

Eine händische Anpassung eines Standards an die jeweiligen projektspezifischen Anforderungen ist immer noch mit einem erheblichen Aufwand und einer entsprechenden Fehleranfälligkeit verbunden.

Außerdem muss der Projekteur ein exzellentes technologisches und leittechnisches Know-how haben, um die projektspezifischen Änderungen korrekt vornehmen zu können.

Demgegenüber besteht bei der Verwendung verschiedener Varianten für jeden Standard eine Problematik in einer Beherrschung einer Variantenvielfalt. Erzeugte man für jede mögliche Variante, die durch den projektspezifischen, verfahrenstechnischen Aufbau der jeweiligen Anlage sowie die jeweiligen spezifische Kundenanforderung bestimmt wird, einen eigenen Standard, hat dies geradezu eine Inflation von Standards zur Folge. Dieses führt zu weiteren Nachteilen wie:
- Bei der projektspezifischen Projektierung muss sich der Projekteur aus einer Vielzahl von Standards die korrekte Variante heraussuchen. Dieser Vorgang ist bereits wieder mit einem erheblichen Aufwand und Fehlerwahrscheinlichkeit verbunden.
- Der Projekteur muss sich außerdem als Experte sehr gut unter "seinen" Standards auskennen, d. h. er muss sich gut in der Bibliothek, dem Archiv oder der Datenbank der Standards auskennen.
- Auch können ihm bei der projektspezifischen Auswahl der Standards Fehler unterlaufen.
- Eine Vielzahl von Standards verhindert, dass eine kontinuierliche Wartung und Pflege der Standards bzw. der Bibliothek, des Archivs oder der Datenbank stattfinden kann.
- Standardbibliotheken, -archive oder -datenbanken, in denen nicht der aktuelle Stand der Erkenntnis abgelegt ist, bzw. Standards, die nicht den aktuellen Stand der Erkenntnis widerspiegeln und die sogar häufig Fehler aufweisen oder die untereinander nicht zueinander passen, werden von den Projekteuren jedoch zurecht abgelehnt.

Das Dokument EP 0 770 944 A1 betrifft ein Verfahren zum automatisierten Generieren von leittechnischen Strukturen für eine konkrete leittechnische Aufgabe unter Einsatz einer Datenverarbeitungseinrichtung und eines darin gespeicherten Expertensystems. Die leittechnischen Strukturen werden als konkrete Generixe in Form von Datensätzen erzeugt. Das Verfahren setzt auf einem verfahrenstechnischen Schema auf und benutzt als Wissensbasis abstrakte Generixe, die schrittweise gemäß einer gespeicherten Suchanweisung konkretisiert werden.

Der Erfindung liegt die Aufgabe zugrunde, ein Verfahren und eine Vorrichtung zu schaffen, mit welchen eine Projektierung einer technischen Anlage, insbesondere eine Erstellung einer Projektierungsunterlage für eine Leittechnik einer technischen Anlage, mit geringem Aufwand und geringer Fehleranfälligkeit durchführbar ist. Ferner liegt der Erfindung die Aufgabe zugrunde, oben genannte Nachteile im Stand der Technik zu verbessern.

Die Aufgabe wird durch das Verfahren zur Erzeugung einer spezifischen Projektierungsunterlage für eine zu projektierende Leittechnik einer technischen Anlage, insbesondere für eine zu projektierende Kraftwerksleittechnik eines Kraftwerks, sowie durch die Vorrichtung zur Erzeugung einer spezifischen Projektierungsunterlage für eine zu projektierende Leittechnik einer technischen Anlage mit den Merkmalen gemäß dem jeweiligen unabhängigen Patentanspruch gelöst.

Bei dem Verfahren zur Erzeugung einer spezifischen Projektierungsunterlage für eine zu projektierende Leittechnik einer technischen Anlage wird eine spezifische Beschreibung einer technischen Anlage erzeugt. Unter Verwendung der spezifischen Beschreibung für die Anlage werden Projektierungsobjekte aus einem Archiv mit vorgegebenen Projektierungsobjekten ausgewählt. Anschließend werden die ausgewählten Projektierungsobjekte unter Verwendung der spezifischen Beschreibung an die Anlage angepasst (spezifischen Projektierungsobjekte), wobei aus den angepassten bzw. spezifischen Projektierungsobjekten die spezifische Projektierungsunterlage gebildet wird.

Unter spezifisch oder auch projektspezifisch sei hierbei zu verstehen, dass ein derart deklarierter bzw. bezeichneter Gegenstand für die Anlage, deren Leittechnik im Projekt zu projektieren ist, charakteristisch ist.

Die Beschreibung der Anlage, für die die Leittechnik zu projektieren ist, beinhaltet eine oder mehrere Informationen zu dieser Anlage. Anders ausgedrückt, über die - spezifische - Beschreibung wird eine Konfiguration einer - bestimmten - Anlage bestimmt.

Eine solche Information bzw. Beschreibung kann beispielsweise eine Anforderung bzw. Anforderungsangabe an die Anlage, eine Randbedingung für die Anlage, eine Funktion der Anlage, ein technischer Aufbau der Anlage, eine technische Komponente der Anlage, Bezeichnungen von Komponenten der Anlage oder ähnliche Charakteristika zu der technischen Anlage sein.

Die Erzeugung der spezifischen Beschreibung kann dabei aus unmittelbaren oder mittelbaren Benutzereingaben generiert werden, beispielsweise durch direkte Angabe von Information, durch Beantwortung von ja/nein-Fragen, durch multiple-choice-Angaben eines Benutzers oder durch Eingabe analoger Zahlenwerte.

Auch ein Einlesen von Information, insbesondere ein automatisiertes Einlesen von Information über eine Schnittstelle kann eine solche Erzeugung sein. Auch umfasst ein Erzeugen ein Zurückgreifen auf eine bereits vorhandene Information, insbesondere eine zentral oder auch dezentral gespeicherte Information.

Die erzeugte spezifische Beschreibung der Anlage kann dabei unter Verwendung bzw. in Form einer (Erfassungs-)Liste, beispielsweise einer (Varianten-)Definitions- und/oder einer Funktionsliste generiert werden bzw. vorliegen.

Über eine solche Varianten-Definitionsliste können bzw. kann beispielsweise der spezifische Aufbau einer verfahrenstechnischen Anlage (z. B. Kesseltyp der Kraftwerksanlage, Anzahl von Aggregaten o. ä.) und/oder zu erfüllende kundenspezifische Anforderungen (z. B. Kunde des VGB-Marktes) definiert sein.

Über eine solche Funktionsliste kann, beispielsweise mittels einer Kennzeichnung bzw. eines Kennzeichens, die zu erzeugende spezifische Projektierungsunterlage bzw. ein Projektierungsobjekt - eindeutig - einer verfahrenstechnischen Komponente der zu projektierenden Anlage, wie einem Aggregat, zugeordnet werden.

Unter Archiv soll bei der Erfindung ganz allgemein eine Verfügbarkeit vorgegebener Information, in diesem Fall von vorgegebenen Projektierungsobjekten, in beliebiger Form und/oder an beliebiger Stelle - oder auch dezentral an beliebigen Stellen - verstanden werden.

So kann ein solches Archiv beispielsweise eine Bibliothek, eine Datenbank o. ä. sein, wo die zur Verfügung stehende Information in beliebiger Form, beispielsweise auf Papier oder auch elektronisch, zur Verfügung steht.

In einem solchen Archiv stehen die vorgegebenen Projektierungsobjekte für eine Projektierungsunterlage zur Auswahl unter Verwendung der spezifischen Beschreibung zur Verfügung.

Eine Projektierungsunterlage kann dabei
- ein Funktionsplan, insbesondere ein Regelungsfunktionsplan (kurz auch nur Regelfunktionsplan), oder ein Steuerungsfunktionsplan einer Komponente, beispielweise eines Antriebs, eines Ventils, einer Klappe, eines Motors o. ä. einer technischen Anlage,
- ein Bedieninterface (Bedienbild) für eine technische Anlage und/oder
- eine Beschreibung, insbesondere eine textuelle Beschreibung, einer technischen Anlage, insbesondere eine Beschreibung einer Funktionalität einer technischen Anlage, sein.

Unter Projektierungsobjekten sind dabei (Bestand-)Teile bzw. Elemente solcher Projektierungsunterlagen zu verstehen.

So kann beispielsweise ein solches Projektierungsobjekt
- ein (Funktion-)Baustein (mit/ohne Verknüpfungen, insbesondere Verbindungen zu anderen Bausteinen) und/oder ein Objekt eines Funktionsplans,
- eine Verknüpfung bzw. eine Verknüpfungslinie und/eine (Teil-)Struktur in einem Funktionsplan und/oder zwischen (Funktions-)Bausteinen,
- ein grafisches Element eines Bedienbildes bzw. Bedieninterfaces oder
- ein Textbaustein einer Beschreibung sein.

Die im Archiv vorgegebenen Projektierungsobjekte sind jeweils für eine Vielzahl ("Maximalvariante") der Funktionalitäten von technischen Anlagen - für die Leittechniken zu projektieren sind - vorgegeben. Dieses kann bevorzugt derart realisiert sein, dass optionale (Funktion-)Bausteine und/oder Objekte eines Funktionsplans, optionale Verknüpfungen und/oder Strukturen/Teilstrukturen in einem Funktionsplan, optionale grafische Elemente eines Bedienbildes und/oder optionale Textbausteine einer Beschreibung vorgegeben sind.

Auch kann ein solches vorgegebenes Projektierungsobjekt mit einer Logik, insbesondere mit einer Binärlogik, und/oder Regel verknüpft sein. Insbesondere kann jedes vorgegebene Projektierungsobjekt, das in Abhängigkeit einer projektspezifischen Variante vorhanden ist oder nicht, jeweils mit einer Binärlogik oder Regel verknüpft sein.

Auch kann ein solches Projektierungsobjekt einen Parameter aufweisen, welcher sich in Abhängigkeit einer Variante verändern kann. Insbesondere kann ein solcher varianten-spezifischer Parameter mit einer entsprechenden binären oder analogen Variablen verknüpft sein.

Weiter kann vorgesehen sein, dass diese Logiken, Regeln und/oder Variablen miteinander verknüpft sind. Auch können Regeln formuliert werden, welche diese Logiken, Regeln und/oder Variablen miteinander verknüpfen.

Mittels dieser Verknüpfungen kann insbesondere die Auswahl und/oder die Anpassung der Projektierungsobjekte durchgeführt werden. Bevorzugt kann dieses dadurch realisiert sein, dass Optionen von optionalen (Funktion-)Bausteinen und/oder Objekten eines Funktionsplans, Optionen von optionalen Verknüpfungen und/oder Strukturen/Teilstrukturen in einem Funktionsplan, Optionen von optionalen grafischen Elementen eines Bedienbildes und/oder Optionen von optionalen Textbausteinen gewählt werden. Beispielsweise kann dies unter Verwendung von Schaltern - mit entsprechender Schalterstellung - realisiert sein.

Anschaulich gesehen, stellt damit dieses erfindungsgemäße Archiv eine Standard-Datenbank dar, in der für jede Projektierungsunterlage ein entsprechender Standard in einer für eine Vielzahl von technischen Anlagen - für die Leittechniken zu projektieren sind - geltenden Ausgestaltung ("Maximalstandard", "Maximalvariante") vorgegeben ist. D. h., die Projektierungsobjekte der Projektierungsunterlagen stehen in dieser Maximal-Datenbank in einer Maximalvariante - zur Auswahl und Anpassung/Spezifizierung - zur Verfügung.

Bei der Auswahl der Projektierungsobjekte aus dem Archiv kann zunächst die spezifische Beschreibung ausgewertet werden, wodurch definiert wird, welcher Standard in welcher Variante im Projekt benötigt wird.

Insbesondere über die Erfassungslisten, beispielsweise über die Varianten-Definitionsliste, kann für die Projektierungsunterlagen, d. h. für Funktionspläne, Bedienbilder und Beschreibungen, definiert sein, welche Variante eines bestimmten Standards im Projekt benötigt wird. Entsprechend dieser Definition können dann die für die spezifische Projektierung benötigten Projektierungsobjekte aus dem Archiv ausgewählt werden.

Bei der Anpassung der ausgewählten Projektierungsobjekte können die spezifische Beschreibung, die Logiken, insbesondere die Binärlogiken, und/oder die Regeln der bzw. "hinter" den Projektierungsobjekten weiter ausgewertet werden.

Ausgehend davon kann dann die Anpassung (Spezifizierung) der Projektierungsobjekte (spezifische Projektierungsobjekte) insbesondere erfolgen durch
- Löschen, Ausblenden und/oder Anzeigen von Strukturen bzw. Strukturelementen und/oder Teilstrukturen und/oder Verbindungen in Funktionsplänen, Bedienbildern oder Beschreibungen
- Löschen, Anzeigen und/oder Ausblenden von Teilen bzw. (Teil-)Objekten von Funktionsplänen, Bedienbildern oder Beschreibungen, die spezifisch nicht benötigt bzw. benötigt werden,
- Erstellen von spezifischen Verbindungen bzw. Verknüpfungen in Funktionsplänen, Bedienbildern oder Beschreibungen
- (Neu-)Verschalten oder Umlegen von Schaltern in Funktionsplänen,
- (Um-)Platzieren spezifischer Projektierungsobjekte
- Setzen von Parameter auf bestimmte Werte.

Die Logik bei der Anpassung, beispielsweise zum Umlegen von Schaltern bzw. zum Ein- und Ausblenden von Objekten, kann dabei als logische Verknüpfung von einer oder mehreren Regeln in der spezifischen Beschreibung aufgebaut sein (z. B. Schalter umlegen, falls Regel x AND NOT Regel y OR Regel z = TRUE). Es ist ebenso möglich, dass Umschaltkriterien aus in der spezifischen Beschreibung angegebenen Zahlenwerten dortiger Variablen abgeleitet werden (z. B. Regel x = 2, Regel y > 3 o . ä.).

Auch ist es vorstellbar, neue Strukturen bzw. Strukturelemente und/oder Teilstrukturen, neue Objekte, die spezifisch benötigt werden, neue Verbindungen bzw. Verknüpfungen, neue Schalter oder Schalterverbindungen zu generieren - und diese in die spezifische Projektierungsunterlage mit einfließen zu lassen. Auch könnten diese "Neuschöpfungen" dann - wieder in Maximalvariante - in das Archiv mit eingepflegt werden. Anders ausgedrückt, neue Varianten von Standards können erzeugt und in der Datenbank abgelegt werden.

Vereinfacht und anschaulich ausgedrückt werden somit bei der Erfindung aus Standards, in denen Maximalvarianten bestimmter Funktionen abgelegt sind, unter Verwendung einfacher (projekt-)spezifischer Angaben automatisch projektspezifische Projektierungsunterlagen "zusammengebaut". Diese (projekt-) spezifischen Angaben können mittels - von dem Projekteur auszufüllenden - Erfassungslisten erhoben werden und definieren, welcher Standard in welcher Variante im Projekt - zum "Zusammenbau" - benötigt wird.

Die erfindungsgemäße Vorrichtung zur Erzeugung einer spezifischen Projektierungsunterlage weist dieses Archiv mit - den dort verfügbaren - vorgegebenen Projektierungsobjekten für eine Projektierungsunterlage sowie die spezifische Beschreibung der zu projektierenden technischen Anlage auf.

Weiter weist die Vorrichtung ein Datenverarbeitungsmittel, insbesondere eine programmierte Recheneinheit - auch im Folgenden beispielhaft als Generator bezeichnet - auf, welches derart eingerichtet ist, dass
- unter Verwendung der spezifischen Beschreibung Projektierungsobjekte aus dem Archiv mit den vorgegebenen Projektierungsobjekten auswählbar sind und
- die ausgewählten Projektierungsobjekte unter Verwendung der spezifischen Beschreibung an die zu projektierende Anlage anpassbar sind (spezifische Projektierungsobjekte), wobei aus den angepassten bzw. spezifischen Projektierungsobjekten die spezifische Projektierungsunterlage bildbar ist.

Die Vorrichtung ist insbesondere geeignet zur Durchführung des erfindungsgemäßen Verfahrens oder einer dessen nachfolgend erläuterten Weiterbildungen.

Die Erfindung erweist sich in zahlreicher Hinsicht erheblich vorteilhaft.

So kann durch die Erfindung auf Grund der automatisierten Vorgehensweise eine erhebliche Kostenreduktion in der Projektierung erreicht werden.

Insbesondere die vereinfachte und automatische Generierung der spezifischen Beschreibung, beispielsweise durch Beantwortung einfacher Fragen in Projektierungslisten durch den Projekteur, spart Zeit und Kosten.

Die projektspezifische Anpassung der Projektierungsunterlagen erfolgt automatisch "auf Knopfdruck", ohne dass der Projekteur sich selbst als Experte mit Details der Projektierungsobjekte im Archiv auseinandersetzen muss. Hier bietet darüber hinaus die Verknüpfung der Regeln mit den Projektierungsobjekten die Möglichkeit schon vordefinierte Strukturen zu schaffen.

Für die Projektierungsobjekte gibt es jeweils nur eine einzige "Maximalvariante" im Archiv. Die Wartung und Pflege des Archivs bzw. der Projektierungsobjekte wird dadurch erheblich vereinfacht.

Die Qualität der Projektierung wird deutlich erhöht, da die projektspezifischen Projektierungsunterlagen aus immer denselben Projektierungsobjekten erzeugt werden, die dann in einer Vielzahl von Anlagen bereits erprobt wurden und sich bewährt haben.
Projektierungsobjekte, die projektspezifisch nicht benötigt werden, treten in der (projekt-)spezifischen Projektierungsunterlage nicht auf und belasten daher auch nicht Ressourcen des Leitsystems.

Die spezifische Projektierungsunterlage enthält letztlich nur die Projektierungsobjekte (in spezifischer Verknüpfung), die im spezifischen Projekt auch benötigt werden und bleibt daher übersichtlich und gut hantierbar.

Bevorzugte Weiterbildungen der Erfindung ergeben sich auch aus den abhängigen Ansprüchen.

Die beschriebenen Weiterbildungen beziehen sich sowohl auf das Verfahren als auch auf die Vorrichtung.

Die Erfindung und die beschriebenen Weiterbildungen können sowohl in Software als auch in Hardware, beispielsweise unter Verwendung einer speziellen elektrischen Schaltung, realisiert werden.

Ferner ist eine Realisierung der Erfindung oder einer beschriebenen Weiterbildung möglich durch ein computerlesbares Speichermedium, auf welchem ein Computerprogramm gespeichert ist, welches die Erfindung oder die Weiterbildung ausführt.

Auch können die Erfindung und/oder jede beschriebene Weiterbildung durch ein Computerprogrammerzeugnis realisiert sein, welches ein Speichermedium aufweist, auf welchem ein Computerprogramm gespeichert ist, welches die Erfindung und/oder die Weiterbildung ausführt.

In einer bevorzugten Weiterbildung wird eine Varianten-Definitionsliste erstellt, in der ein Projekteur insbesondere angibt, welcher spezifische Aufbau einer verfahrenstechnischen Anlage - für die eine Leittechnik zu projektieren ist - (z. B. Kesseltyp der Kraftwerksanlage, Anzahl von Aggregaten o. ä.) vorliegt und/oder welche kundenspezifischen Anforderungen zu erfüllen sind (z. B. Kunde des VGB-Marktes).

In einer weiteren bevorzugten Weiterbildung wird eine Funktionsliste erstellt, in der ein Projekteur ein Projektierungsobjekt eindeutig, beispielsweise mittels eines Kennzeichens, einem verfahrenstechnischen Aggregat zuordnet. Beispielsweise kann ein Funktionsplan für einen Regelantrieb über ein Kennzeichen eindeutig einem bestimmten Ventil der Anlage zugeordnet werden. Oder ein erforderlicher Messwert wird eindeutig einer bestimmten Messstelle zugeordnet.
Es kann weiter bevorzugt vorgesehen sein, dass die Eingabe in die Varianten-Definitionsliste und/oder Funktionsliste durch Beantwortung von ja/nein-Fragen und/oder Eingabe analoger Zahlenwerte (z. B. bei Abfrage der Anzahl von Aggregaten) erfolgt.

Bevorzugt kann dann weiter vorgesehen sein, dass die Varianten-Definitionsliste und/oder die Funktionsliste mittels des Datenverarbeitungsmittels eingelesen werden bzw. wird.

In einer weiteren bevorzugten Ausgestaltung kann vorgesehen sein, die spezifische Beschreibung, insbesondere die Erfassungsliste bzw. die Erfassungslisten, unter Verwendung von Regeln auszuwerten, wodurch die auszuwählenden Projektierungsobjekte bestimmbar sind (Auswahl des benötigen Standards bzw. der benötigten Standardvariante) und/oder die Anpassung der ausgewählten Projektierungsobjekte (Spezifizierung) an die zu projektierende Anlage durchführbar ist.

In einer bevorzugten Ausgestaltung ist vorgesehen, die Erzeugung der spezifischen Projektierungsunterlage mit einem Kennzeichnungssystem zu verbinden bzw. zu erweitern.

Hier kann für bei der Projektierung vorgesehene Objekte, beispielsweise für Messungen, Antriebe, Messgeber, Logiken, Ventile, Schalter u. ä., insbesondere für alle Eingangs- und/oder Ausgangsgrößen der Projektierungsobjekte, jeweils eine Bezeichnung bzw. Dummykennzeichnung bzw. ein Dummykennzeichen vergeben werden.

Bei der Auswahl und/oder der Anpassung können dann die Dummykennzeichen der ausgewählten Objekte ermittelt und durch deren - falls angegeben bzw. vorhanden, beispielsweise aus der spezifischen Beschreibung - spezifische Kennzeichen ersetzt werden.

Dies kann vereinfacht derart realisiert werden, dass eine Liste (Kennzeichenliste) mit allen für die bzw. bei der spezifischen Projektierung verwendeten Dummykennzeichen erzeugt wird und dort diese durch die - falls angegeben - spezifischen Kennzeichen ersetzt werden.

Dies hat den Vorteil, dass eine spezifische Kennzeichnung nur einmal erfolgen muss und sich diese dann bei Ersetzung des in der Regel mehrmals in der spezifischen Projektierungsunterlage auftretenden Dummykennzeichens mit dem jeweiligen spezifischen Kennzeichen automatisch in die spezifische Projektierungsunterlage fortpflanzt bzw. dorthin "gemeldet" wird.

Treten bei der spezifischen Projektierungsunterlage bzw. bei dortigen Objekten noch - nicht spezifizierte - Dummykennzeichen auf, können diese auch durch spätere einmalige Angabe benutzerseitig "nachgepflegt" werden - und pflanzen sich wie beschrieben automatisch über deren Ersetzung in der Projektierungsunterlage fort bzw. werden dorthin rückgemeldet.

Weiterhin ist bevorzugt vorgesehen, dass die erzeugte Projektierungsunterlage für die zu projektierende Leittechnik der Anlage, insbesondere für die zu projektierende Kraftwerksleittechnik des Kraftwerks, eingesetzt bzw. verwendet wird, und/oder die Anlage, insbesondere das Kraftwerk, unter Verwendung der erzeugten spezifischen Projektierungsunterlage gesteuert, geregelt und/oder überwacht wird.

Hierzu kann insbesondere die spezifische Projektierungsunterlage auf einem Kraftwerksleitrechner implementiert bzw. installiert werden, um dort die Steuerung, Regelung und/oder Überwachung der Anlage bzw. des Kraftwerks auszuführen.

In Figuren ist ein Ausführungsbeispiel der Erfindung dargestellt, welches im Weiteren näher erläutert wird.

Es zeigen
- FIG 1: Übersicht eines Systems zu einer automatischen Erzeugung von Projektierungsunterlagen für eine Kraftwerksleittechnik (ART-E),
- FIG 2: ART-E bei Anpassung eines Funktionsplans,
- FIG 3: eine Anpassung eines Funktionsplans,
- FIG 4: eine Anpassung eines Funktionsplans,

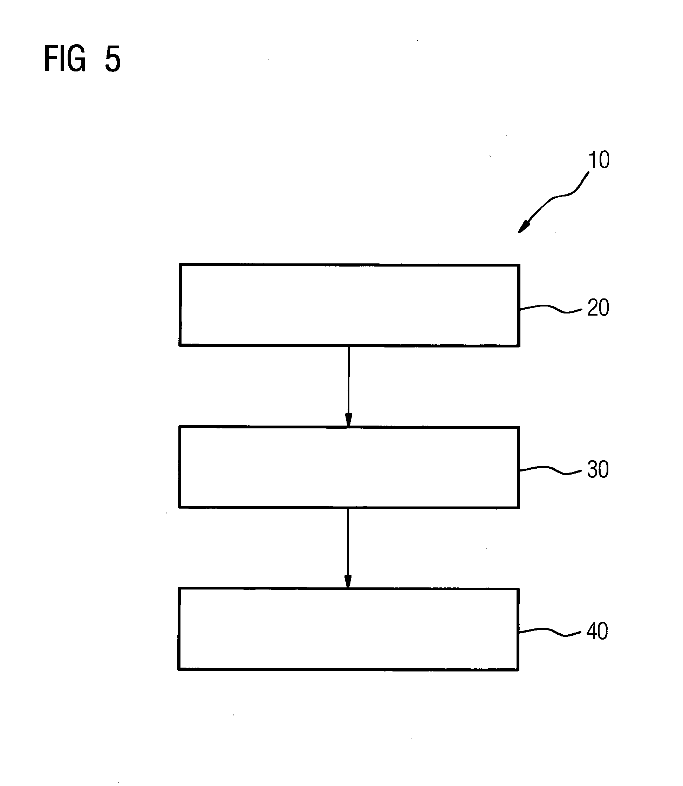

- FIG 5: Übersicht über Verfahrensschritte bei dem System zu einer automatischen Erzeugung von Projektierungsunterlagen für eine Kraftwerksleittechnik (ART-E),
- FIG 6: eine (Varianten-)Definitionsliste, VDef und
- FIG 7: eine Funktionsliste FL.

Ausführungsbeispiel: System zur automatischen Erzeugung von Projektierungsunterlagen mittels Maximalstandards (Advanced Rapid Technology Engineering [ART-E]) (1)

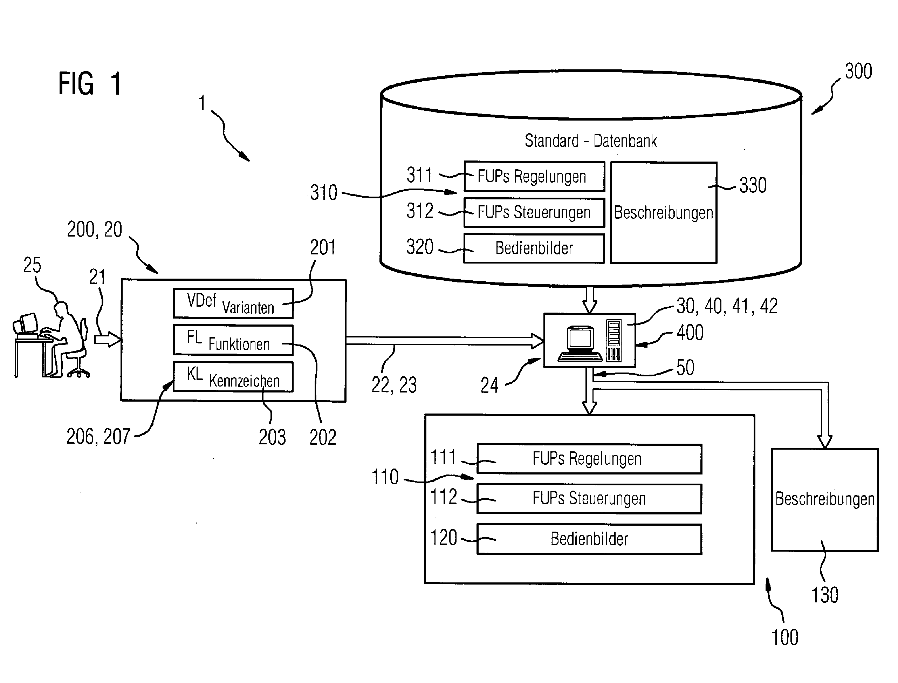

FIG 1 zeigt eine Übersicht eines Systems 1 - mit dessen wesentlichen Bestandteilen, Funktionen und (funktionelle) Zusammenhängen - zu einer automatischen Erzeugung von Projektierungsunterlagen für eine Kraftwerksleittechnik.

Dieses (Projektierungs-)System 1, im Folgenden kurz als ART-E (Advanced Rapid Technology Engineering) bezeichnet, weist die folgende - zunächst in übersichtlicher Darstellung - beschriebene Struktur bzw. Funktionalität auf:
- ART-E umfasst eine Standard-Datenbank 300, in der für jede Projektierungsunterlage (Funktionsplan 310, Bedienbild 320, Beschreibung 330) ein entsprechender Standard 310, 320, 330, 311, 312 abgelegt ist.
- Jeder Standard 310, 320, 330, 311, 312 ist dabei als Maximalvariante aufgebaut, d. h. alle möglichen Funktionen, die in verschiedenen (Projektierungs-)Projekten erforderlich sein könnten, werden in diesem einen Standard mit aufgenommen.
- Jede Projektierungsunterlage bzw. jeder Standard 310, 320, 330, 311, 312 setzt sich zusammen aus Projektierungsobjekten, welche beispielsweise Bausteine und/oder Verbindungslinien in Funktionsplänen 310, 311, 312, grafische Elemente in Bedienbildern 320 oder Textbausteine in Beschreibungen 330 sind.
- Jedes Projektierungsobjekt eines Standards 310, 320, 330, 311, 312, das in Abhängigkeit einer projektspezifischen Variante vorhanden ist oder nicht, wird mit einer entsprechenden Binärlogik verknüpft.
- Jeder Parameter eines Projektierungsobjekts bzw. eines Standards, der sich in Abhängigkeit einer projektspezifischen Variante zu verändern hat, wird mit einer entsprechenden binären oder analogen Variablen verknüpft.
- Es werden Varianten-Definitionslisten 201 erstellt, in denen ein Projekteur 25 angeben kann, welcher spezifische Aufbau einer zu projektierenden verfahrenstechnischen Anlage (z. B. Kesseltyp der Kraftwerksanlage, Anzahl von Aggregaten o. ä.) vorliegt und welche kundenspezifischen Anforderungen zu erfüllen sind (z. B. Kunde des VGB-Marktes) (Verfahrensschritt 20 in FIG. 1).
- Die Eingabe in die Varianten-Definitionslisten 201 erfolgt durch Beantwortung von ja/nein-Fragen oder Eingabe analoger Zahlenwerte (z. B. bei Abfrage der Anzahl von Aggregaten) (Schritt 21 in FIG. 1).
- Es werden Funktionslisten 202 erstellt, in denen ein Projekteur die zu erstellenden Projektierungsunterlagen eindeutig einem verfahrenstechnischen Aggregat zuordnen kann (z. B. der zu erstellende Funktionsplan für einen Regelantrieb wird über ein Kennzeichen eindeutig einem bestimmten Ventil der Anlage zugeordnet, ein erforderlicher Messwert wird eindeutig einer bestimmten Messstelle zugeordnet o. ä.) 20.
- Ein Generator 400 führt automatisch die folgenden Aufgaben durch:
   > Einlesen der Angaben in der Varianten-Definitionsliste 22,
   > Einlesen der Angaben in der Funktionsliste 23,
   > Entsprechende Auswertung der Binärlogiken für die Projektierungsobjekte der Projektierungsunterlagen 24,
   > Erstellung der projektspezifischen Projektierungsunterlage 100, 110, 120, 130, 111, 112 aus dem Standard unter Berücksichtigung der die einzelnen Projektierungsobjekte betreffenden Binärlogiken (z. B. Löschen der Objekte, die projektspezifisch nicht benötigt werden und korrekte Verbindung und Platzierung der verbleibenden Objekte) 41,
   > Anpassung der Parameter in der Projektierungsunterlage entsprechend der Angabe in der Varianten-Definitionsliste 42,
   > Ausgabe der so erstellten projektspezifischen Projektierungsunterlage unter Berücksichtigung der Angaben in der Funktionsliste 50.

Im Folgenden werden die einzelnen Elemente von ARTE näher beschrieben.

### Standard-Datenbank 300

In der Standard-Datenbank 300 sind Standards 310, 320, 330 für die Funktionspläne 311, 312 (Regelungen, Steuerungen) sowie für Bedienbilder 320 und Beschreibungen 330 abgelegt (Standard-Datenbank).

Dabei ist jede Standard-Unterlage eine Maximalvariante dieser Funktion. Im realen Projekt wird dann - z. B. durch Abschalten von optionalen Teilstrukturen - nur ein Teil dieser Maximalvariante zum Einsatz kommen (Anpassung, Spezifizierung).

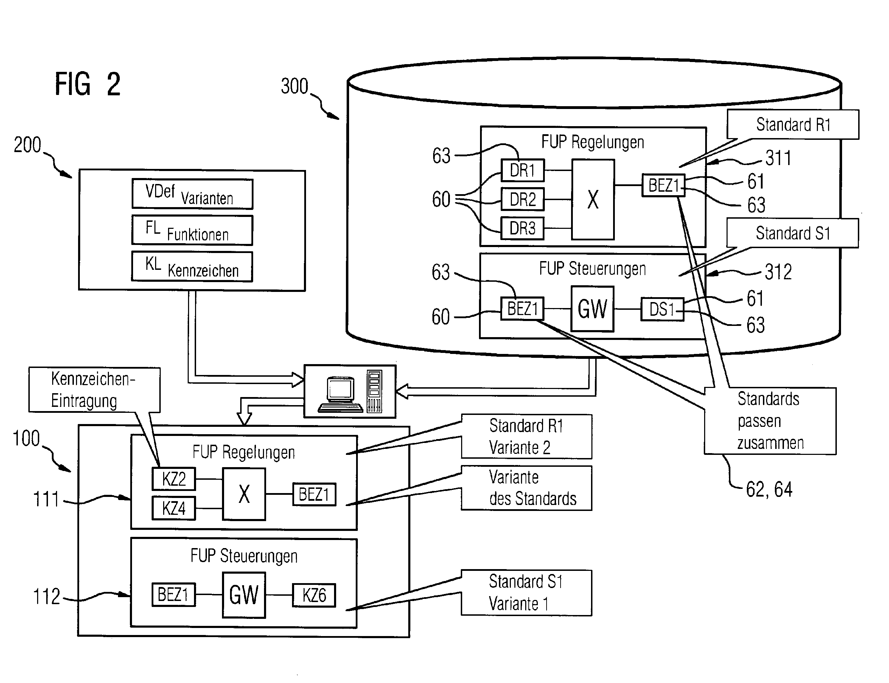

Ein-/Ausgangssignale 60, 61 in den Standards 310, 320, 330 werden mit Dummy-Kennzeichen 63 belegt. Gleichzeitig werden die einzelnen Standards jedoch derart definiert, dass sie ein in sich geschlossenes System darstellen 62 (FIG 2).

Die zwischen den Standards herzustellenden Verbindungen werden bereits in der Standard-Datenbank geschlossen 64, benötigte Signale aus der Messdatenerfassung oder Rückmeldungen der Antriebe werden automatisch generiert, der Funktionsplan ggf. strukturell angepasst (FIG 2).

Die optionalen Teilstrukturen 71 werden in den Standards 310 durch die Verwendung analoger und binärer Schalter 72 definiert. Dadurch ist eine Gesamtdarstellung aller in einem Standard enthaltenen Funktionen möglich.
In einer Beschreibung zu den Standards 310 kann anschaulich angegeben werden, in welchen Fällen ein Schalter 72 in der einen und in welchen Fällen er in der anderen Stellung 73 liegt.

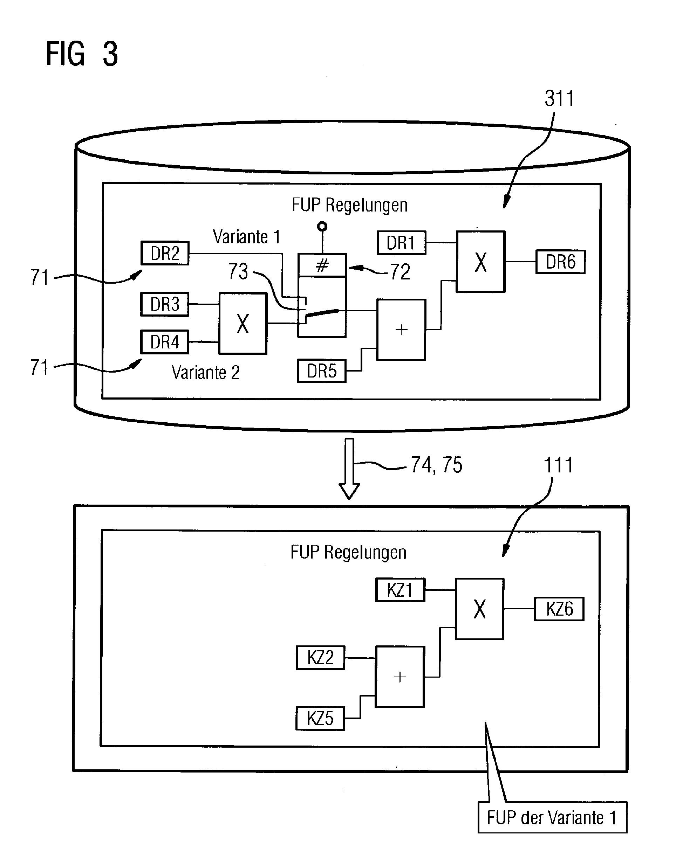

Bei der Generierung des projektspezifischen Funktionsplanes 110, 111, 112 wird automatisch die nicht benötigte Teilstruktur 71 inklusive des Schalters 72 selbst gelöscht 74 und die Verbindungen, die dadurch aufgebrochen werden, wieder geschlossen 75 (FIG 3).

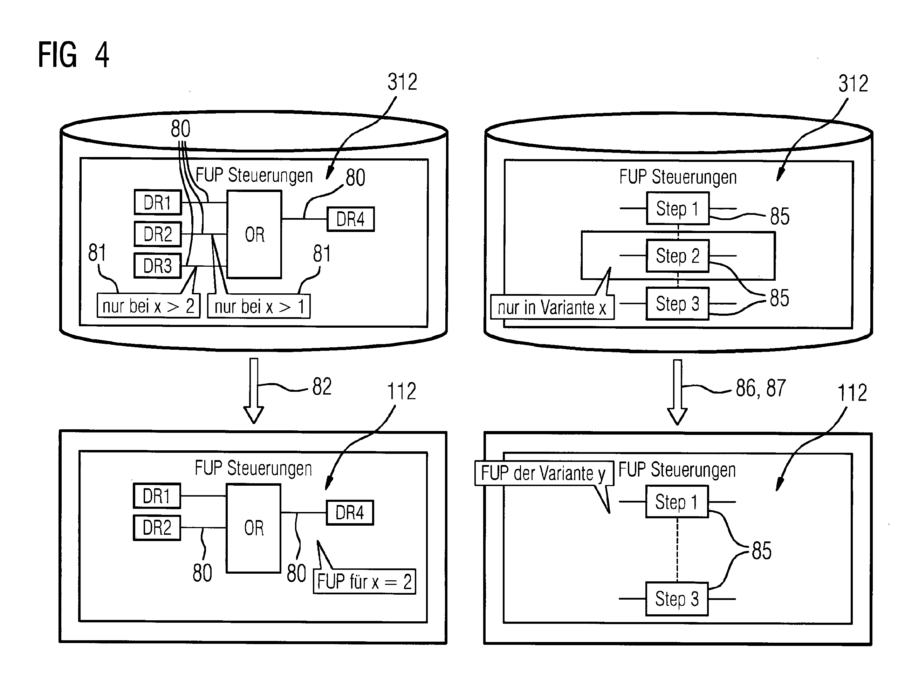

Parallel dazu ist es auch möglich, Verbindungslinien 80 als einer bestimmten Variante zugehörig zu definieren 81. Wird die entsprechende Variante nicht gewählt, wird die Verbindungslinie 81 automatisch gelöscht 82 (FIG 4).

Auch ohne das Vorhandensein eines Schalters 72 wird automatisch ein Baustein 85 gelöscht 86 und die aufgebrochene Verbindung wieder geschlossen 87, wenn er in der gewählten Variante nicht benötigt wird (FIG 4).

In äquivalenter Art und Weise werden in den Bedienbildern 320 die grafischen Elemente und in den Beschreibungen 330 einzelne Textabschnitte einer Variante zugeordnet und automatisch gelöscht, wenn die entsprechende Variante nicht gewählt wird.

Für die verfahrenstechnischen Teilsysteme der Anlage werden die benötigten Standards wie beschrieben erstellt.

Passend zu diesen Standards muss es Erfassungslisten 90 geben, mit deren Hilfe definiert wird, welche Standards in welcher Variante im Projekt jeweils benötigt werden.

Der Aufbau der Erfassungslisten 90 wird im Folgenden beschrieben.

### Erfassungslisten 90

Mit Hilfe von Erfassungslisten 90 (spezifische Beschreibung 200), die von einem Projekteur 25 auszufüllen sind 21, wird definiert, welcher Standard in welcher Variante im Projekt benötigt wird.

### (Varianten-)Definitionsliste VDef 201

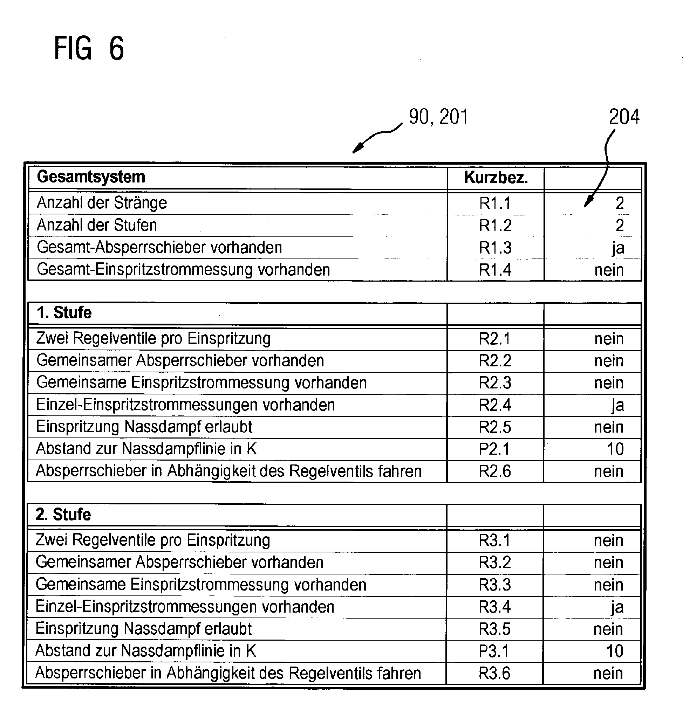

In der VDef 201 ist für die Funktionspläne der Regelungen und Steuerungen, Bedienbilder und die Beschreibungen festgelegt, welche Variante eines bestimmten Standards im Projekt benötigt wird (FIG 6).

Die Angaben in der VDef 201 führen dazu, dass
- in den Funktionsplänen die in den Standards definierten Schalter 72 entweder umgelegt oder nicht umgelegt werden 73 (vgl. FIG 3),
- in den Funktionsplänen die Verbindungslinien 80 und Bausteine 85, die einer bestimmten Variante zugeordnet sind, entweder gezeigt oder nicht gezeigt werden 82, 86, 87 (vgl. FIG 4),
- in den Bedienbildern bestimmte Teilstrukturen gezeigt oder nicht gezeigt werden 74, 75 (vgl. FIG 3),
- bestimmte Teilbeschreibungen ausgegeben oder nicht ausgegeben werden.

Die Logik zum Umlegen von Schaltern 72 bzw. zum Ein- und Ausblenden von Objekten 86 kann dabei als logische Verknüpfung von einer oder mehreren Regeln in der VDef aufgebaut sein, z. B. Schalter umlegen, falls R1.3 AND NOT R2.2 OR R2.4 = TRUE.

Es ist ebenso möglich, dass Umschaltkriterien aus in der VDef 201 angegebenen Zahlenwerten 204 abgeleitet werden, z. B. R1.1 = 2, R1.2 > 3 o. ä.

Außerdem sind in der VDef 201 Angaben enthalten, die dazu führen, dass in den Funktionsplänen Parameter auf die angegebenen Werte gesetzt werden, z. B. P2.1 = 10. Funktionsliste, FL 202

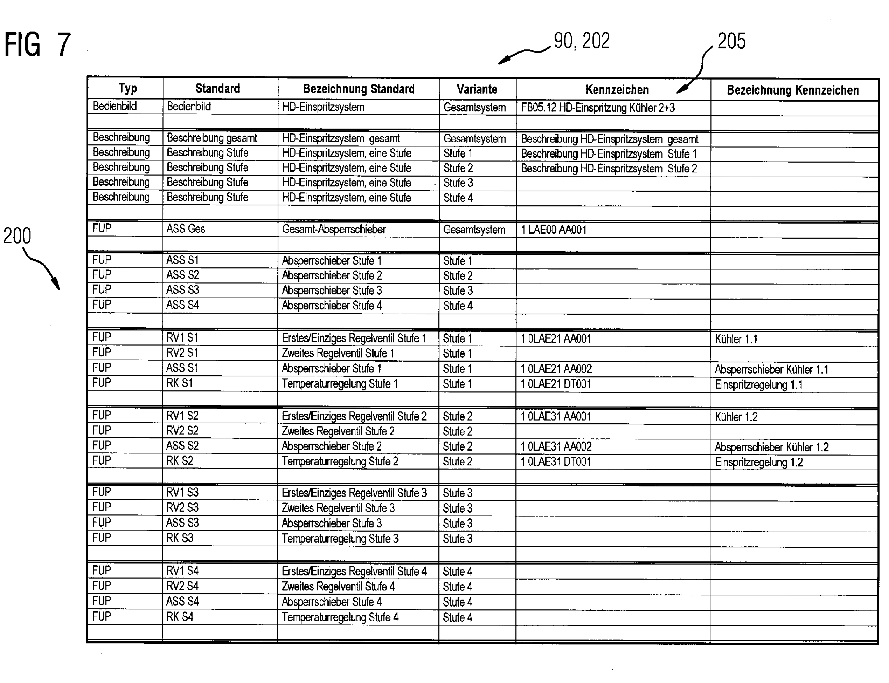

In der FL 202 (FIG 7) ist die Zuordnung der Kennzeichen 205 für Bedienbilder, Beschreibungen, Regelkreise, Steuerungen zu den Standards bzw. der in der VDef 201 angegebenen Varianten (Regelsätze) festgelegt.

Für jedes Kennzeichen 205 (Bedienbild, Beschreibung, Regelantrieb, Steuerantrieb) ist dabei festgelegt, welcher Standard benötigt wird. Jedem Kennzeichen 205 ist dabei genau ein Standard zugeordnet und umgekehrt. Außerdem wird auf eine Variante (einen Regelsatz) in der VDef verwiesen, um die benötigte Ausführung dieses Standards festzulegen.

### Kennzeichen-Liste, KL 203

Nach dem Generieren bzw. nach der Anpassung/Spezifizierung 40 hat der Funktionsplan 110, die Bedienbilder 120 und die Beschreibungen 130, die aus einem Standard in einer bestimmten Variante erstellt wurden, noch offene Verbindungen.

Alle Dummy-Kennzeichen 63, die "von außen" auf diesen Standard wirken (Messsignale, Signale aus anderen Standards) wurden noch nicht definiert.

Hierzu gelten folgende Maßgaben:
- Alle Verbindungen, die in der Standard-Datenbank 300 geschlossen waren, werden im Projekt bzw. in der spezifischen Projektierungsunterlage 110, 120, 130 ebenfalls wieder geschlossen sein, sobald Quell- und Zielplan generiert wurden.
- Die Dummy-Kennzeichen 63 werden - soweit durch die Eintragungen in der FL 202 bereits bekannt - durch die projektspezifischen Kennzeichen 205 ersetzt.
- Der Anwender/Projekteur 25 hat die Möglichkeit, sich alle offenen Verbindungen der Funktionspläne 110, Bedienbilder 120 und Beschreibungen 130 anzeigen zu lassen 206. Als offen werden hier Verbindungen zu Messungen auftreten. Jedes offene Signal wird dabei nur einmal in der KL 203 geführt.
- Nun kann der Anwender in der KL 203 die fehlenden Kennzeichen 205 eintragen 207.

### Automatische Generierung, Anpassung/Spezifizierung 40

Das System 1 zur automatischen Generierung von (spezifischen) Projektierungsunterlagen 100 ist in der Lage, aufbauend auf den in den Erfassungslisten 90 vorhandenen Informationen, die Funktionspläne (Einzelpläne, Bereichs-/ Übersichtspläne, Pläne aus dem Fail Safe-Bereich) 110 und Bedienbilder 120 sowie die Beschreibungen 130 automatisch zu generieren.

Der Generator 400
- ermittelt aus den Informationen in der VDef 201 und FL 202 die benötigten Standards 30,
- wählt aus der Standard-Datenbank 300 die korrekten Standards 310, 320, 330 aus 30,
- passt die Standards automatisch an (Erzeugen der projektspezifischen Varianten) 40 und erstellt dabei die spezifische Projektierungsunterlage 100, d. h. die spezifischen Funktionspläne 110, Bedienbilder 120 und Beschreibungen 130 40,

- erzeugt die KL 203,
- ersetzt die Dummy-Kennzeichen 63 durch projektspezifische Kennzeichen 205.

Der Generator 400 ist dabei so allgemein aufgebaut, dass der Projekteur der Standards und Erfassungslisten 310, 320, 330, 90 Änderungen an den Standards 310, 320, 330 vornehmen kann, ohne dass eine softwaremäßige Anpassung des Generators 400 erforderlich ist.

Insbesondere hat der Standard-Projekteur/-Designer die Möglichkeit,
- die interne Struktur der Standards 310, 320, 330 zu ändern,
- neue Varianten von Standards 310, 320, 330 zu erzeugen, d. h. in den Standards 310, 320, 330 zusätzliche Schalter 72 oder Objekte 85, die bestimmten Varianten zugeordnet sind, einzubauen und in Erweiterung der VDef 201 zusätzliche Kriterien festzulegen, mit denen diese Schalter 72 umgelegt bzw. die Objekte 85 ein- oder ausgeblendet werden,
- die VDef 201 durch zusätzliche Varianten (Regelsätze) zu erweitern,
- die Logik zum Umsetzen der Varianten auf die Position der Schalter 72 oder das Ein- und Ausblenden von Objekten 85 zu ändern (z. B. wird vorher ein Schalter in Abhängigkeit der Regel A umgelegt und nachher in Abhängigkeit der Regel A&B),
- zusätzliche Standards 310, 320, 330 zu definieren und die FL 202 entsprechend zu erweitern,
- zusätzliche Eingangssignale 60 in den Standards 310, 320, 330 zu verwenden oder bisher verwendete Eingangssignale 60 zu löschen.

### Bezugszeichenliste

- 1: (Projektierungs-)System, Advanced Rapid Technology Engineering (ART-E)

- 10: Verfahrensschritte

- 20: Erzeugung spezifische Beschreibung
- 21: Benutzereingabe
- 22: Einlesen (Varianten-)Definitionsliste
- 23: Einlesen Funktionsliste
- 24: Auswertung von Logiken bzw. Binärlogiken
- 25: Projekteur

- 30: Auswahl Projektierungsobjekte

- 40: Anpassung
- 41: Erstellung von projektspezifischen Projektierungsunterlagen
- 42: Anpassung von Parametern

- 50: Ausgabe von projektspezifischen Projektierungsunterlagen

- 60: Eingangssignal
- 61: Ausgangssignal
- 62: Geschlossenes System
- 63: Kennzeichen, Dummy-Kennzeichen
- 64: Schließen von Verbindungen, geschlossene Verbindungen

- 71: Optionale Teilstruktur
- 72: Schalter, analoger Schalter, binärer Schalter
- 73: Schalterstellung
- 74: Löschen einer Teilstruktur
- 75: Schließen von Verbindungen

- 80: Verbindung, Verbindungslinie
- 81: Zuordnung einer Verbindungslinie zu einem Standard
- 82: (automatisches) Löschen einer Verbindungslinie
- 85: Baustein, Objekt
- 86: Löschen eines Bausteins
- 87: Schließen einer Verbindungslinie

- 90: Erfassungsliste

- 100: spezifische Projektierungsunterlage
- 110: (spezifischer) Funktionsplan
- 111: (spezifischer) Funktionsplan Regelung
- 112: (spezifischer) Funktionsplan Steuerung
- 120: (spezifisches) Bedienbild
- 130: (spezifische) Beschreibung

- 200: spezifische Beschreibung der Anlage
- 201: (Varianten-)Definitionsliste
- 202: Funktionsliste
- 203: Kennzeichenliste
- 204: Zahlenwert
- 205: Kennzeichen, projektspezifische Kennzeichen
- 206: Rückmeldung, Anzeigen noch nicht spezifizierter Kennzeichen
- 207: Eintragen von spezifischen Kennzeichen in eine Kennzeichenliste

- 300: Archiv, Maximaldatenbank
- 310: (vorgegebener) Funktionsplan
- 311: (vorgegebener) Funktionsplan Regelung
- 312: (vorgegebener) Funktionsplan Steuerung
- 320: (vorgegebenes) Bedienbild
- 330: (vorgegebene) Beschreibung

- 400: Generator, Recheneinheit, Datenverarbeitungsmittel

## Patentansprüche

1. Verfahren zur Erzeugung einer spezifischen, leittechnischen Projektierungsunterlage (100) für eine zu projektierende Leittechnik einer spezifischen, technischen Anlage, insbesondere für eine zu projektierende Kraftwerksleittechnik eines Kraftwerks, unter Verwendung eines Archivs mit auswählbaren, leittechnischen Standard-Projektierungsunterlagen (Standards) aus miteinander verknüpften, anpassbaren, leittechnischen Projektierungsobjekten, wobei die aus dem Archiv auswählbaren, leittechnischen Standard-Projektierungsunterlagen dort jeweils als Maximalvariante in einer für eine Vielzahl von technischen Anlagen geltenden Ausgestaltung vorgegeben sind, mit folgenden Schritten:
- Erzeugung einer spezifischen Beschreibung (200) einer spezifischen, technischen Anlage (20),
- Auswertung der spezifischen Beschreibung (200), Ermittlung, welche Standard-Projektierungsunterlage (Standard) in welcher Variante für die spezifische, technische Anlage benötigt wird, und Auswahl von der für die spezifische, technische Anlage benötigten leittechnischen Standard-Projektierungsunterlage aus dem Archiv (300),
- Erzeugung der spezifischen, leittechnischen Projektierungsunterlage (100) aus der ausgewählten, leittechnischen Standard-Projektierungsunterlage
- durch automatische Anpassung der miteinander verknüpften, anpassbaren, leittechnischen Projektierungsobjekte der ausgewählten, leittechnischen Standard-Projektierungsunterlage unter Verwendung der spezifischen Beschreibung (200) an die spezifische, technische Anlage,
- wobei bei der automatischen Anpassung zumindest Löschungen, Abschaltungen und/oder Ausblendungen bei den miteinander verknüpften, anpassbaren, leittechnischen Projektierungsobjekten der ausgewählten, leittechnischen Standard-Projekti-erungsunterlage durchgeführt werden.

2. Verfahren zur Erzeugung einer spezifischen, leittechnischen Projektierungsunterlage (100) nach mindestens einem der voranstehenden Ansprüche, bei dem die spezifische Beschreibung (200) eine Konfiguration der spezifischen, technischen Anlage, insbesondere die Konfiguration der spezifischen, technischen Anlage unter Verwendung einer Erfassungsliste (90), beschreibt.

3. Verfahren zur Erzeugung einer spezifischen, leittechnischen Projektierungsunterlage (100) nach mindestens einem der voranstehenden Ansprüche, bei dem eine leittechnische Projektierungsunterlage (300, 310, 320, 330, 100, 110, 120, 130) ein Funktionsplan (110, 310), insbesondere ein Regelungsfunktionsplan (111, 311) oder ein Steuerungsfunktionsplan (112, 312), ein Bedienbild (120, 320) und/oder eine Beschreibung (130, 330) einer technischen Anlage ist.

4. Verfahren zur Erzeugung einer spezifischen, leittechnischen Projektierungsunterlage (100) nach mindestens einem der voranstehenden Ansprüche, bei dem ein anpassbares, leittechnisches Projektierungsobjekt (110, 111, 112, 120, 130, 310, 311, 312, 320, 330) ein (Funktions-)Baustein und/oder ein Objekt eines Funktionsplans (110, 310), eine Verknüpfung und/oder eine (Teil-)Struktur in einem Funktionsplan (110, 310), ein grafisches Element eines Bedienbildes (120, 320) und/oder ein Textbaustein einer Beschreibung (130, 330) ist.

5. Verfahren zur Erzeugung einer spezifischen, leittechnischen Projektierungsunterlage (100) nach mindestens einem der voranstehenden Ansprüche, be dem die spezifische Beschreibung (200), insbesondere eine Erfassungsliste (90), unter Verwendung von Regeln ausgewertet wird, wodurch die miteinander verknüpften, anpassbaren, leittechnischen Projektierungsobjekte der ausgewählten, leittechnischen Standard-Projektierungsunterlage an die spezifische, technische Anlage angepasst (40) werden.

6. Verfahren zur Erzeugung einer spezifischen, leittechnischen Projektierungsunterlage (100) nach mindestens einem der voranstehenden Ansprüche, bei dem die Anpassung (40) der miteinander verknüpften, anpassbaren, leittechnischen Projektierungsobjekte der ausgewählten, leittechnischen Standard-Projektierungsunterlage durch ein Löschen, Ausblenden und/oder Anzeigen von Strukturen und/oder Teilstrukturen und/oder Verbindungen in Funktionsplänen, Bedienbildern oder Beschreibungen, durch ein Löschen, Anzeigen und/oder Ausblenden von (Teil-)Objekten von Funktionsplänen, Bedienbildern oder Beschreibungen, durch ein Erstellen von spezifischen Verbindungen in Funktionsplänen, Bedienbildern oder Beschreibungen, durch ein (Neu-)Verschalten oder Umlegen von Schaltern in Funktionsplänen, durch ein (Um-)Platzieren spezifischer, leittechnischer Projektierungsobjekte und/oder durch ein Setzen von Parametern auf bestimmte Werte erfolgt.

7. Vorrichtung zur Erzeugung einer spezifischen, leittechnischen Projektierungsunterlage (100) für eine zu projektierende Leittechnik einer spezifischen, technischen Anlage, insbesondere für eine zu projektierende Kraftwerksleittechnik eines Kraftwerks, mit
- einer spezifischen Beschreibung (200) einer spezifischen, technischen Anlage,
- einem Archiv (300) mit auswählbaren, leittechnischen Standard-Projektierungsunterlagen (Standards) aus miteinander verknüpften, anpassbaren, leittechnischen Projektierungsobjekten, wobei die aus dem Archiv auswählbaren, leittechnischen Standard-Projektierungsunterlagen dort jeweils als Maximalvariante in einer für eine Vielzahl von technischen Anlagen geltenden Ausgestaltung vorgegeben sind,
- einem Datenverarbeitungsmittel (400), insbesondere einer programmierten Recheneinheit, welches zur Durchführung eines Verfahrens zur Erzeugung einer spezifischen, leittechnischen Projektierungsunterlage (100) nach mindestens einem der voranstehenden-Ansprüche eingerichtet ist.

8. Verwendung der nach mindestens einem der voranstehenden Ansprüche erzeugten spezifischen, leittechnischen Projektierungsunterlage (100) für eine Leittechnik einer spezifischen, technischen Anlage, insbesondere für eine Kraftwerksleittechnik eines Kraftwerks.

## Claims

1. Method for producing a specific process control planning document (100) for instrumentation and control equipment to be planned for a specific technical system, in particular for power plant instrumentation and control equipment to be planned for a power plant, using an archive with selectable, process control standard planning documents (standards) from interlinked, adaptable, process control planning objects, wherein, in each case, the process control standard planning documents which are selectable from the archive are specified as maximum variants in an embodiment which is valid for a large number of technical systems, having the following steps:
- generation of a specific description (200) of a specific technical system (20),
- evaluation of the specific description (200), determination of the variant of the standard planning document (standard) which is required for the specific technical system, and selection from the archive (300) of the process control standard planning document required for the specific technical system,
- generation of the specific process control planning document (100) from the selected process control standard planning document
- by automatic adaption of the interlinked, adaptable, process control planning objects of the selected, process control standard planning document using the specific description (200), to the specific technical system,
- wherein at least deletions, disconnections and/or masking-out of the interlinked, adaptable, process control planning objects of the selected, process control standard planning document are implemented during automatic adaption.

2. Method for producing a specific process control planning document (100) according to at least one of the preceding claims, in which the specific description (200) describes a configuration of the specific technical system, in particular the configuration of the specific technical system using an entry list (90).

3. Method for producing a specific process control planning document (100) according to at least one of the preceding claims, in which a process control planning document (300, 310, 320, 330, 100, 110, 120, 130) is a function plan (110, 310), in particular a closed-loop control function plan (111, 311) or an open-loop control function plan (112, 312), an operator display (120, 320) and/or a description (130, 330) of a technical system.

4. Method for producing a specific process control planning document (100) according to at least one of the preceding claims, in which an adaptable, process control planning object (110, 111, 112, 120, 130, 310, 311, 312, 320, 330) is a (function) block and/or an object of a function plan (110, 310), a link and/or a (sub)-structure in a function plan (110, 310), a graphical element of an operator display (120, 320) and/or a text block of a description (130, 330).

5. Method for producing a specific process control planning document (100) according to at least one of the preceding claims, in which the specific description (200), in particular an entry list (90), is evaluated using rules, whereby the interlinked, adaptable, process control planning objects of the selected, process control standard planning document are adapted to the specific technical system (40).

6. Method for producing a specific process control planning document (100) according to at least one of the preceding claims, in which the adaption (400) of the interlinked, adaptable, process control planning objects of the selected, process control standard planning document is achieved by deletion, masking-out and/or display of structures and/or substructures and/or connections in function plans, operator displays or descriptions, by deletion, display and/or masking-out of (partial) objects of function plans, operator displays or descriptions, by creation of specific connections in function plans, operator displays or descriptions, by (re)-connection or actuation of switches in function plans, by (re)-positioning of specific process control planning objects and/or by setting parameters to specific values.

7. Device for producing a specific process control planning document (100) for instrumentation and control equipment to be planned for a specific technical system, in particular for power plant instrumentation and control equipment to be planned for a power plant, having
- a specific description (200) of a specific technical system,
- an archive (300) with selectable, process control standard planning documents (standards) from interlinked, adaptable, process control planning objects, wherein, in each case, the process control standard planning documents which are selectable from the archive, are specified as maximum variants in an embodiment which is valid for a large number of technical systems,
- data processing means (400), in particular a programmed arithmetic logic unit which is set up for implementing a method for producing a specific process control planning document (100) as claimed in at least one of the preceding claims.

8. Application according to at least one of the preceding claims of the specific process control planning document (100) for instrumentation and control equipment of a specific technical system, in particular for power plant instrumentation and control equipment of a power plant.

## Revendications

1. Procédé de production d'un support ( 100 ) de conception spécifique en technique de conduite pour une technique de conduite à concevoir d'une installation technique spécifique, notamment pour une technique de conduite à concevoir d'une centrale électrique, en utilisant des archives ayant des supports de conception standards ( standards ) en technique de conduite pouvant être choisis et composés d'objets de conception en technique de conduite adaptables et combinés les uns aux autres, les supports de conception standards en technique de conduite pouvant être choisis dans les archives, y étant donnés à l'avance respectivement sous la forme d'une variante maximum dans un mode de réalisation valant pour une pluralité d'installations techniques, comprenant les stades suivants :
- production d'une description ( 200 ) spécifique d'une installation ( 20 ) technique spécifique,
- exploitation de la description ( 200 ) spécifique, détermination de quel support de conception standard ( standard ) est nécessité dans quelle variante pour l'installation technique spécifique et choix du support de conception standard en technique de conduite nécessité pour l'installation technique spécifique dans les archives ( 300 ),
- production du support ( 100 ) de conception en technique de conduite spécifique à partir du support de conception standard en technique de conduite choisi
- par adaptation automatique des objets de conception en technique de conduite, adaptables et combinés les uns aux autres, du support de conception standard en technique de conduite choisi en utilisant la description ( 200 ) spécifique à l'installation technique spécifique,
- dans lequel, dans l'adaptation automatique, on effectue au moins des effacements, des déconnexions et/ou des suppressions dans les objets de conception en technique de conduite, adaptable et pouvant être combinés les uns aux autres, du support de conception standard en technique de conduite choisi.

2. Procédé de production d'un support ( 100 ) de conception en technique de conduite spécifique suivant au moins l'une des revendications précédentes, dans lequel la description ( 200 ) spécifique décrit une configuration de l'installation technique spécifique, notamment la configuration de l'installation technique spécifique en utilisant une liste ( 90 ) de détection.

3. Procédé de production d'un support ( 100 ) de conception en technique de conduite spécifique suivant au moins l'une des revendications précédentes, dans lequel un support ( 300, 210, 320, 330, 100, 110, 120, 130 ) de conception en technique de conduite est un plan ( 110, 310 ) de fonction, notamment un plan ( 111, 311 ) de fonction de régulation, ou un plan ( 112, 312 ) de fonction de commande, un tableau ( 120, 320 ) de commande et/ou une description ( 130, 330 ) d'une installation technique.

4. Procédé de production d'un support ( 100 ) de conception en technique de conduite spécifique suivant au moins l'une des revendications précédentes, dans lequel un objet ( 110, 111, 112, 120, 130, 310, 311, 312, 320, 330 ) de conception en technique de conduite adaptable est un module de fonction et/ou un objet d'un plan ( 110, 310 ) de fonction, une combinaison et/ou une sous-structure d'un plan ( 110, 310 ) de fonction, un élément graphique d'un tableau ( 120, 320 ) de commande et/ou un module de texte d'une description ( 130, 330 ) .

5. Procédé de production d'un support ( 100 ) de conception en technique de conduite spécifique suivant au moins l'une des revendications précédentes, dans lequel la description ( 200 ) spécifique, notamment une liste ( 90 ) de détection, est exploitée en utilisant des règles, par lesquelles les objets de conception en technique de conduite, adaptables et combinés les uns aux autres, du support de conception standard en technique de conduite choisi sont adaptés à l'installation technique spécifique.

6. Procédé de production d'un support ( 100 ) de conception en technique de conduite spécifique suivant au moins l'une des revendications précédentes, dans lequel l'adaptation ( 40 ) des objets de conception en technique de conduite, adaptables et combinés les uns aux autres, du support de conception standard en technique de conduite choisi s'effectue par un effacement, une suppression et/ou une indication de structures et/ou de sous-structure et/ou de liaisons dans des plans de fonction des tableaux de commande ou des descriptions par un effacement, une indication et/ou une suppression de sous-objets de plans de fonction, de tableaux de commande ou de descriptions, par un remplacement de liaisons spécifiques dans des plans de fonction, des panneaux de commande ou des descriptions, par une reconnexion ou une commutation de commutateurs dans des plans de fonction, par un replacement d'objets de conception en technique de conduite spécifiques et/ou en mettant des paramètres à des valeurs déterminées.

7. Dispositif de production d'un support ( 100 ) de conception en technique de conduite spécifique pour une technique de conduite à concevoir d'une installation technique spécifique, notamment pour une technique de conduite à concevoir d'une centrale électrique, comprenant
- une description ( 200 ) spécifique d'une installation technique spécifique,
- des archives ( 300 ) ayant des supports de conception standards ( standards ) en technique de conduite pouvant être choisis parmi des objets de conception en technique de conduite adaptables et combinés les uns aux autres, les supports de conception standards en technique de conduite pouvant être choisis dans les archives, y étant donnés à l'avance respectivement sous la forme d'une variante maximum dans un mode de réalisation valant pour une pluralité d'installations techniques,
- un moyen ( 400 ) de traitement de données, notamment une unité informatique programmée, qui est conçue pour effectuer un procédé de production d'un support ( 100 ) de conception en technique de conduite spécifique suivant au moins l'une des revendications précédentes.

8. Utilisation du support ( 100 ) de conception en technique de conduite spécifique produit suivant l'une des revendications précédentes pour une technique de conduite d'une installation technique spécifique, notamment pour une technique de conduite d'une centrale électrique.
